# EUROPEAN PATENT APPLICATION

(11) **EP 1 249 175 A2**
(43) Date of publication of application: **16.10.2002**
(21) Application number: 01128363.7
(22) Date of filing: 30.11.2001
(51) Int. Cl.: A23G 9/24, A23G 9/26, A23G 9/08

(54) **Method and apparatus for producing ice-creams or similar products with stick, covered with chocolate or similar products**

(30) Priority: 05.04.2001 IT MI010738
(71) Applicant: SIDAM S.R.L., 20032 Cormano (MI) (IT)
(72) Inventor: Grigoli, Franco Albino Luigi, 20125 Milano (IT)
(74) Representative: La Ciura, Salvatore

(57) **Abstract**

This invention relates to an apparatus and the respective method for producing ice-creams with stick, covered, providing for:
- filling the moulds, become cold by means of previous production cycles, with the covering product, for example chocolate;
- suction of chocolate from the moulds so that only the desired layer of frozen product adheres to said moulds;
- filling of the mould with ice-cream or other edible product;
- insertion of the stick before the starting of the freezing of the top or during or soon afterwards for obtaining the best results;
- gas freezing of the product top for obtaining a closing "plug" of the tub;
- starting of brine freezing that will end after the dosage of the closing plug;
- optionally measure such a chocolate layer or other edible product as to obtain a total covering.

Said method according to the invention allows to obtain ice-creams or similar covered products, by accurately giving to the covering layer the desired shape and above all by using a brine (or similar liquids) linear or rotary tank type system, quick and inexpensive.

## Description

This invention relates to an apparatus and the respective method for producing covered ice-creams, with stick, providing for:
- filling the moulds, become cold by means of previous production cycles, with the covering product, for example chocolate;
- suction of chocolate from the moulds so that only the desired layer of frozen product adheres to said moulds;
- filling of the mould with ice-cream or other edible product;
- insertion of the stick before the starting of the freezing of the top or during or soon afterwards for obtaining the best results;
- freezing of the product in air or gas cooling tunnel;
- optionally measure such a chocolate layer or other edible product to complete the covering.

Said method according to the invention allows to obtain ice-creams or similar covered products, by accurately giving to the covering layer the desired shape.

In addition, it is also possible to make use of existing apparatuses, without the need to produce *ad* *hoc* equipment, but by completing the system with components already in use in the same sector.

At present, the apparatuses for producing ice-creams with stick can be divided into two categories, according to the type of cooling method being used.

In the first type of apparatuses, providing for tunnel cooling with cooling air or gas circulation, the product is cooled until it reaches such a consistency as to allow the extrusion; it is therefore sent to an extruder, which shapes the product; said product is then cut in the intended thickness; during the extrusion the stick is inserted.

The product, with the stick in, is then put down on trays travelling through the cooling tunnel wherein gas or air circulate at a proper low temperature (usually in air around -40°C).

At the exit, the product is taken by the stick and briefly dunked in a melted chocolate tank in order to obtain the intended covering layer.

Such system offers the advantage of an easy displacement of the products from the trays, since, because of the different coefficients of expansion between product and supporting tray, at the end of the freezing stage, it is sufficient to give to the tray a little mechanical vibration to cause the detachment of the product.

On the other hand, this method does not allow to control the final shape of the product since the ice-cream, upon the extrusion can expand and change its original shape accordingly, which is also slightly deformed during the fall of the product on the tray.

In addition, the melted chocolate produces a covering layer with variable thickness according to the cooling temperature and time when it comes into contact with the cold product that, since it is in an upright position, makes the flowing of the chocolate towards the opposite side of the stick easier.

The second category of apparatuses provides for the use of a series of moulds intended to hold the product and that are cooled by making them pass through a brine bath or other liquid with similar characteristics.

The production cycle provides for the dosage of the product into moulds, the brine freezing, different operations intended for the specific product, the utilisation of hot fluid in order to allow the unfreezing and, finally, the extraction of the product, which therefore passes to the covering phase still by immersion in the melted chocolate.

Also this method does not allow getting a precise shape covering, and in any case there is a certain waste of energy, both due to the heating of the surface of the moulds and their subsequent washing in the case of linear apparatuses.

Both the conventional technologies, therefore, do not allow producing covered ice-creams with precisely-shaped surface.

The solution of this problem is now offered by this invention, which relates to a method and the respective system for producing ice-creams with stick, covered, which provides for the measurement of the covering product in the mould at a certain temperature, sucking up it in such a way as to get a desired thickness layer that adheres to the mould; the subsequent measurement of the ice-cream with pasty consistency (at around -3, -4°C); the insertion of the stick; the optional measurement of a chocolate layer to complete the filling in the top of the product contained in the mould; the final freezing in the tunnel.

By this system the product comes out of the mould with the very same dimensions and volumes as those planned without any variation.

The covering layer into contact with the mould does not adhere, and therefore allows an easy mechanical extraction of the product without the need to direct to the outer surface of the mould a hot fluid, thus allowing also a considerable energy saving and simplifying the production cycle.

The product, under said conditions, comes out of the mould with the very same dimensions and volumes as those planned without any variation.

In addition, the outer surface of the covering product remains perfectly smooth and with the exact definition as the shape of the mould.

This invention will be now described in full details, by way of example but without any limitation thereto, with reference to the single figure hereto annexed in which:
- figure 1 schematically shows the elevation view of an apparatus according to the invention;
- figure 2 schematically shows the plan of the run of the moulds in the cooling tunnel.

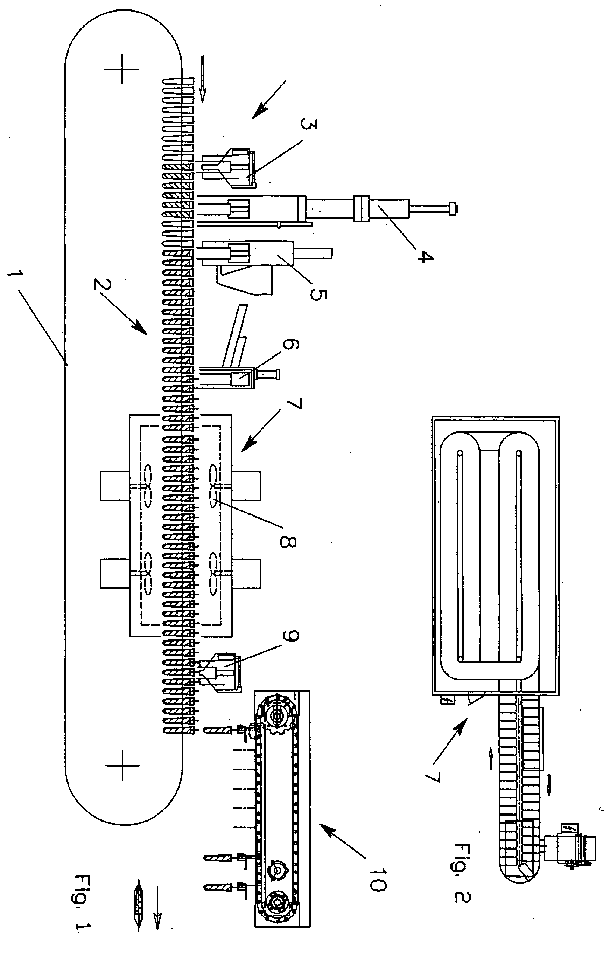

With reference to the above mentioned figure, the system includes a run, for example ring-shaped, indicate as a whole with 1, along which a plurality of rows of moulds 2 move for the production of ice-creams. The system includes:
- a chocolate dosage equipment 3;
- below said equipment, a suction device 4 which drains the mould of the chocolate not yet frozen;
- a measuring device 5 which fills the mould with the product;
- a stick device 6, which insert the sticks into the single moulds filled with product;
- an air or gas cooling station 7, wherein cooling gas circulates by means of known type fans 8;
- a second equipment 9, optional, which measures a chocolate, or other product, covering layer, in such a way as to complete the covering of the product contained in the mould; and finally
- a product extraction station 10.

The operation is described as follows.

The moulds reach the station 3, cooled by means of the previous process.

The measuring devices then fill the moulds with melted chocolate moulds that, in contact with the cold walls of the mould, freezes in surface, thus creating a thickness that can be controlled according to the subsequent processes.

Afterwards, according to the desired thickness, the suction device 4 sucks down the melted chocolate by the moulds, so that inside the latter only the layer that creates the shell and the mass of which is insufficient to cause an excessive heating of the moulds remains.

Below the suction devices 4, the measuring device 5 fills then the moulds with the chocolate shell of product at a temperature of around -3/-4°C, and the sticks are thus inserted by means of the stick device 6.

The moulds then pass into the cooling station 7 wherein air or a cooling gas, being moved by the fans 8, causes the complete freezing of the product, which solidifies reaching the final intended temperature.

A second measuring device 9, optional, measures into the moulds containing the product, a thin layer of a product that can be still chocolate, which creates a sort of closing wall.

At the end of the cycle the product is picked up by the equipment 10, by means of a simple mechanical intervention and then sent to the packaging.

The moulds, keeping on their running, start again the cycle.

From the foregoing it will be clear that through the method and equipment described it is possible to obtain ice-creams in which the product surface can be shaped with accuracy, making use of existing tunnel apparatuses completed, where necessary, with the addition of a few apparatuses, on the other hand already in use in the sector, eliminating the current systems of covering of product with chocolate or other edible product, which is usually obtained after the unfreezing required for the extraction of the product.

A skilled in the art may make changes and different versions, which shall be considered as included within the competence of this invention.

## Claims

1. Method for producing ice-creams with stick, covered, **characterised by** the fact of providing the following phases:
• cooling of the moulds up to a temperature sufficient to cause the surface freezing of a covering product of the ice-cream;
• filling of the moulds with said covering product for the formation of a desired layer of solidified product into contact with the mould wall;
• suction of the product not yet solidified so that only a thin layer of covering adheres to the mould wall;
• filling of the mould with the cooled product until it reaches a pasty consistency;
• insertion of the stick;
• freezing of the product in air or gas cooling tunnel;
• extraction of the finished products.

2. Method according to the claim 1, **characterised by** the fact of providing a further phase of dosage of an optional covering layer into the mould already filled with the product to complete the covering of the product.

3. Method according to the claim 2, **characterised by** the fact that said completion phase of covering is carried out at the exit of the cooling tunnel.

4. System for the production of ice-creams with stick, covered, **characterised by** the fact of providing:
• devices suited to cool the moulds;
• devices suited to fill the mould with the product intended to realise the covering;
• devices suited to suck this covering product just below the filling station, in such a way as to let only the desired layer of cooled product adhere to the mould wall;
• measuring devices suited to fill the mould of product;
• devices suited to insert the stick;
• a final cooling tunnel of the product.
• devices suited to pull the finished product out of the moulds.

5. System for the production of ice-creams with stick according to claim 5, **characterised by** the fact of providing devices suited to measure out into the mould filled with product a thin layer of covering material.

6. System according to claim 4, in which said devices suited to cause the freezing of the product consist of an air or cooling gas tunnel.

7. System according to claim 4, in which the devices suited to measure out into the mould filled with product a thin covering layer are positioned at the exit of the freezing tunnel.
